(19) Europäisches Patentamt
European Patent Office
Office européen des brevets

(11) **EP 1 655 853 B1**

(12) **EUROPEAN PATENT SPECIFICATION**

(45) Date of publication and mention
of the grant of the patent:
**04.04.2007 Bulletin 2007/14**

(51) Int Cl.:
*H04B 1/69* (2006.01)   *H04L 25/49* (2006.01)
*H03K 7/04* (2006.01)

(21) Application number: **04425826.7**

(22) Date of filing: **04.11.2004**

(54) **Method of shaped-pulses modulation**

Verfahren zum Modulieren geformter Impulse

Procédé de modulation d'impulsions preformée

(84) Designated Contracting States:
**AT BE BG CH CY CZ DE DK EE ES FI FR GB GR
HU IE IS IT LI LU MC NL PL PT RO SE SI SK TR**

(43) Date of publication of application:
**10.05.2006 Bulletin 2006/19**

(73) Proprietor: **Freelux S.R.L.
21045 Gazzada Schianno VA (IT)**

(72) Inventor: **Piacentini, Sergio
21036 Gemonio (Varese) (IT)**

(74) Representative: **Tansini, Elio Fabrizio
C/O Bugnion S.p.A.,
Viale Lancetti, 17
20158 Milano (IT)**

(56) References cited:
**WO-A2-01/28121        US-B1- 6 690 741**

## Description

The present invention relates to a method of communicating information, of the type comprising the features recited in the preamble of claim 1.

The method of radio communicating information in accordance with the invention applies in an efficient manner in the field of radio devices powered by low-energy sources and, preferably, is put into practice in appliances in which radio communication must take place under conditions of strong spread reflections between moving devices or between devices in the immediate vicinity of which moving objects are placed.

In radio communications of the traditional type, the Doppler effect produced by movement, combined with the phenomenon of composite reception of the direct signal and reflected signals width-modulates the received signal and, depending on the transmitting technique used, can affect the outcome of the communication to a greater or smaller extent. Traditional radio communications are greatly disturbed by it and the generated noise, under some situations, can be of such a nature as to destroy the received data packages. For applications that are particularly subjected to the influence of the Doppler effect, in case of use of a traditional transmitting technique, it would be necessary to provide a transmission algorithm with a great redundancy in the transmitted data, capable of ensuring reception of the whole data package even if one or more consecutive packages were destroyed. Data transmission with great redundancy together with the difficulty in discriminating the valid packages generally gives rise to a high energy consumption and greater slowness in communication.

For example, it is known from WO 01/28121 a wireless modem incorporating a SAW-based correlator for performing the spreading and de-spreading functions in the transmitter and receiver. Such a modem may operate as an analog or digital pulse transmitter and receiver, and it is structured so as to increase the bit rate transmission by using a plurality of correlators wherein each one is configured with a unique function (i.e., code) that is orthogonal with all other functions.

It is also known from Us 6690741 an "ultra-wideband" transmitter working with of ultra-wideband (UWB) pulses. One embodiment comprises a low-level UWB source (e.g., an impulse generator or time-gated oscillator (fixed or voltage-controlled)), a waveform adapter (e.g., digital or analog filter, pulse shaper, and/or voltage variable attenuator), a power amplifier, and an antenna to radiate a band-limited and/or modulated UWB or wideband signals. In another embodiment, a low-level impulse signal is approximated by a time-gated continuous-wave oscillator to produce an extremely wide bandwidth pulse with deterministic center frequency and bandwidth characteristics.

Also known within the scope of data transmitting technologies is a transmission technology of the pulse type in the absence of a carrier, referred to as Ultra Wide Band (UWB), which consists in generating, transmitting and receiving a very short pulse within the radio frequencies, typically of a duration included between about ten picoseconds and few nanoseconds. This radio technology has a strong immunity to the Doppler effect but, disadvantageously, the pulse trains generated thereby produce wide-spectrum waveforms. The UWB technology therefore can be only applied in frequency ranges where a large occupancy of the band is admissible, in compliance with the regulations in force. In addition, due to the high speed of the pulses used and the processing complexity of same, solutions involving low energy consumption can be hardly obtained.

The Applicant has found that the methods involving radio communication of information of the above described type can be improved under different points of view, particularly in terms of purification of the transmitted signal and energy consumption of the radiofrequency circuits of the transmitting and/or receiving devices.

In accordance with the present invention, the Applicant has identified the possibility of proposing a method of radio communicating information enabling the energy consumption to be reduced while ensuring an optimal transmission quality.

The above and further aims that will become more apparent in the course of the following description, are achieved by a method of radio communicating information in accordance with one or more of the appended claims.

Further features and advantages will become more apparent from the detailed description of a preferred but not exclusive embodiment of a communication apparatus putting the inventive method into practice.

This description will be set out hereinafter with reference to the accompanying drawings, given by way of non-limiting example, in which:

- Fig. 1 shows the course of the power signal generated with the method in accordance with the present invention;
- Figs. 2a and 2b detail the envelope of a single pulse, i.e. a modulation pulse and a power pulse, respectively;
- Fig. 3 diagrammatically shows a transmitting device capable of putting the method of the invention into practice;
- Fig. 4 shows a non-limiting example of the oscillator in the transmitter seen in Fig. 3 (component 102);
- Figs. 5a, 5b, 5c and 5d show the correlation in time between the signals generated by the transmitter in accordance with the method of the invention;
- Fig. 6 diagrammatically shows a receiving device capable of putting the method of the invention into practice; and
- Fig. 7 shows the correlation in time between the signals generated in the receiving device.

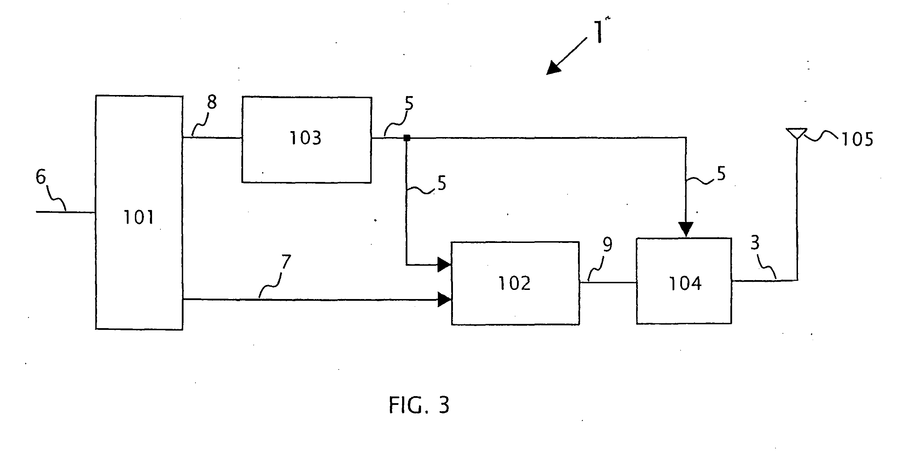

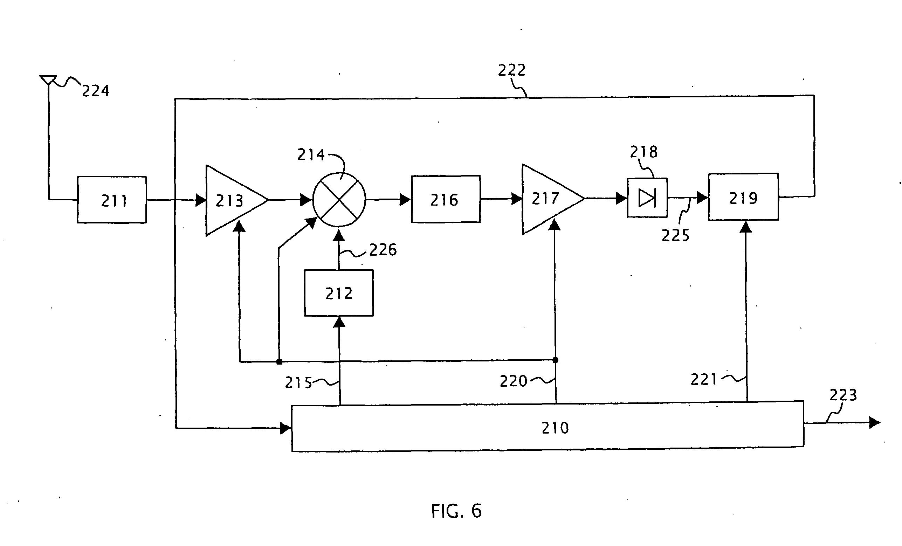

With reference to the drawings, generally denoted at 1 is a transmitting device (Fig. 3) and at 2 is a receiving device (Fig. 6) forming a communication apparatus capable of putting the inventive method into practice.

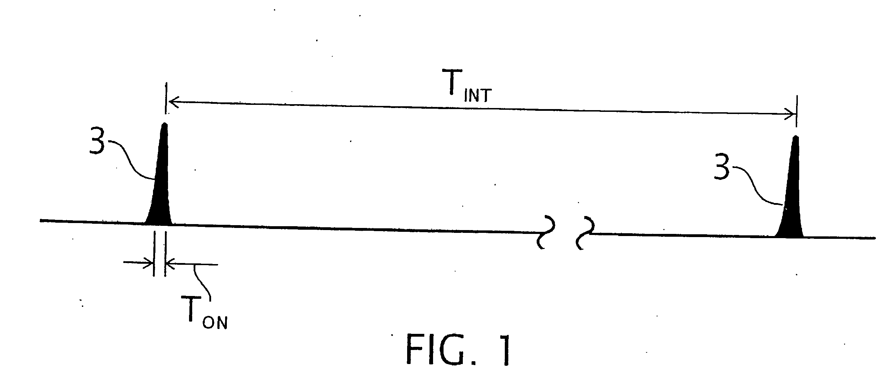

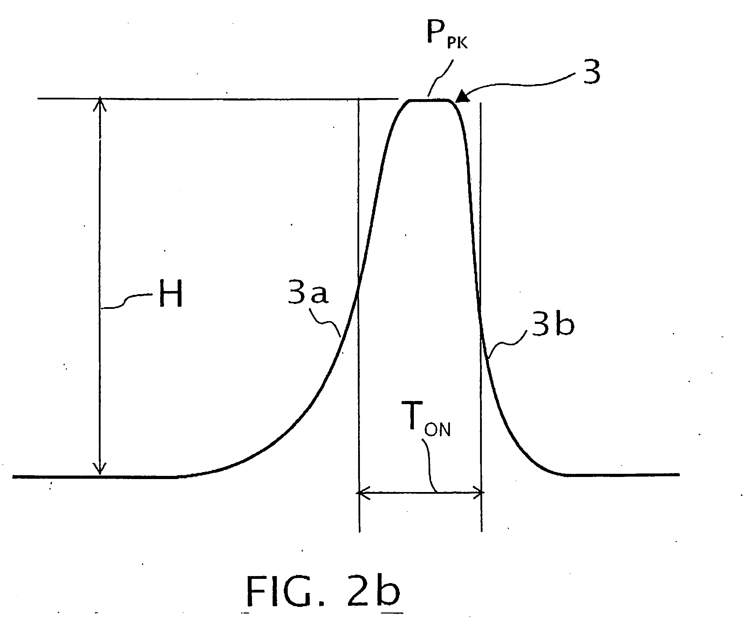

The method consists in generating a plurality of power pulses 3 (Figs. 1 and 2b) the time spacing of which is modulated by the information to be transmitted, and in transmitting these power pulses 3 to the receiver 2 via radio waves.

The relative position of each power pulse 3 with respect to the preceding pulse 3 can take a given number of time values $N_{LP}$. Each pulse is therefore able to represent a coded value of N-bits ($N_{BP}$). This value $N_{BP}$ is given by the following formula: $N_{BP} = \log_2 * N_{LP}$.

The generated and transmitted pulses can be considered as single pulses or pulses grouped together according to a scheme dictated by a mathematical algorithm.

If said pulses are grouped it is also possible to modulate the relative position of each pulse with respect to another, or of one group relative to the following one, thereby obtaining a more complicated modulation scheme, capable of improving the signal intelligibility and/or data redundancy.

By causing the pulse duration or width $T_{ON}$ of each power pulse 3 to be very small as compared with the time interval Tint between one pulse 3 and the other (Fig. 1), an important reduction in the average power is obtained, the emitted peak power being the same.

Advantageously, the power pulses 3 to be transmitted are produced through generation of a plurality of carrier signals 4 that are mutually spaced apart by respective time spacing intervals, and through generation of a plurality of modulation pulses 5 also mutually spaced apart by respective time spacing intervals.

The carrier signals 4 are modulated through the modulation pulses 5 to generate the power pulses 3 to be transmitted.

To this aim, the transmitting device 1 comprises a control and timing unit 101 preferably based on a microcontroller or a dedicated logic that, on reception of one datum to be transmitted 6 on the input line, generates the digital enable signal 7 of an oscillator 102 and the digital profile signal 8, not shown in detail, of the envelope shape of the signal to be transmitted.

A plurality of enable signals 7 is sequentially sent to oscillator 102 to trigger generation of the plurality of carrier signals 4. A pulse shaper 103 has the task of converting the digital profile signal 8 into an analog waveform to give origin to the modulation pulses 5.

The plurality of modulation pulses 5 is sent into the oscillator 102, to modulate said oscillator 102 and output a plurality of partly modulated pulses 9.

The plurality of partly modulated pulses 9 is subsequently sent to an output amplifier 104 which is preferably also reached by the plurality of modulation pulses 5 modulating the amplifier 104, to output the power pulses to be transmitted 3.

Modulation of the output amplifier 13 must take place as linearly as possible, preferably by directly modulating feeding and/or polarisation of the active amplification component. The amplifier output 104 is connected to an antenna 105.

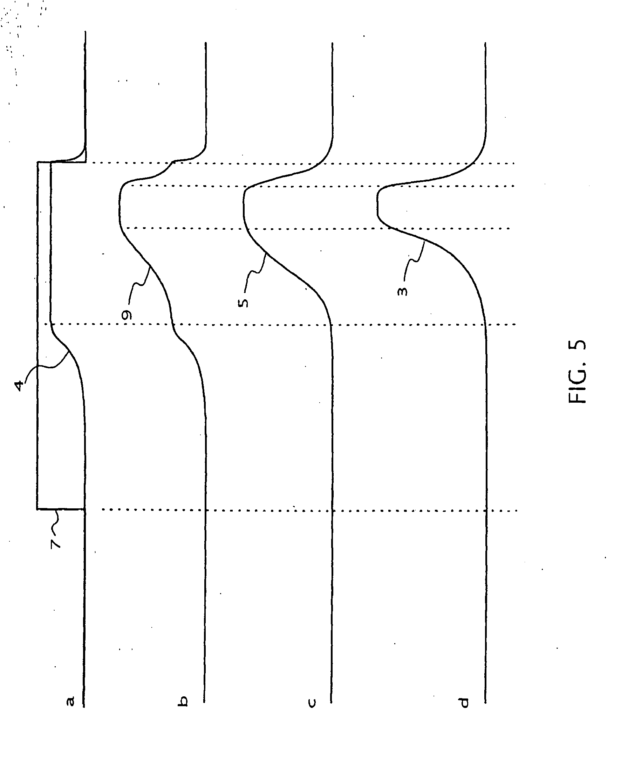

Figs. 5a-5d show the correlation between the development in time of the different signals, as follows: Fig. 5a represents the enable signal 7 of oscillator 102 and the carrier signal 4 generated by oscillator 102; Fig. 5b represents the envelope of the radio-frequency signal at the output of oscillator 102, i.e. one of the partly modulated signals 9; Fig. 5c represents the output of the pulse shaper 103, i.e. one of the modulation pulses 5; Fig. 5d represents the envelope of the power pulse 3 at the output of the final amplifier 104.

The radio-frequency circuits must be planned in such a manner as to fully set at zero the absorbed current during the time intervals between one pulse and the other.

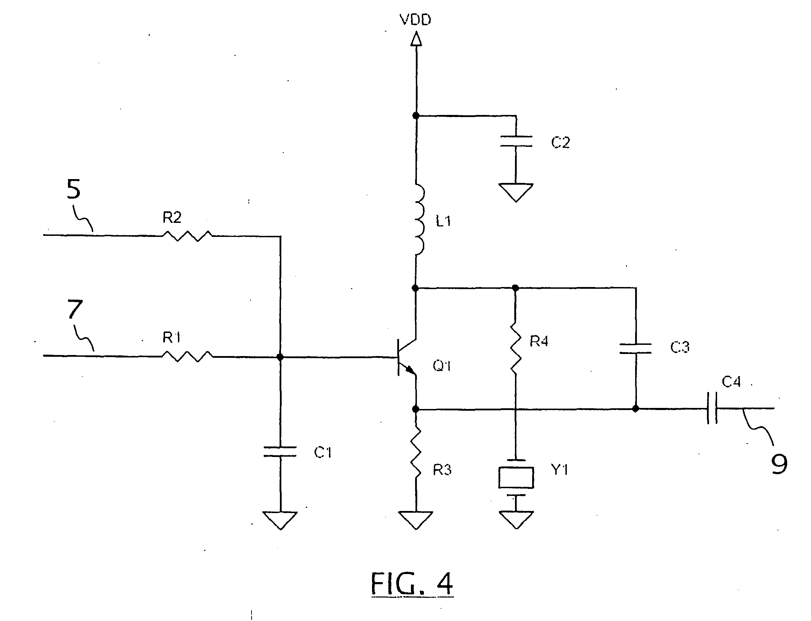

The triggering time of oscillator 102 must be as much as possible reduced in order to maintain the average circuit absorption level low. In addition, to avoid the presence of spurious emissions on the side bands, particular care must be paid in order that, during the triggering step, there will be no frequency drift. Since current absorption of the oscillator 102 too should be set at zero during the intervals between the different pulses, use of PLLs (phase-locked loops) that would require frequency-hooking at each pulse is to be avoided, this causing delays and possible spurious emissions. The oscillator therefore will be preferably based on a surface acoustic wave (SAW) resonator of which Fig. 4 shows an illustrative scheme that is not to be intended in a limiting sense.

As it appears from a comparison between Figs. 5a and 5c, the triggering time of oscillator 102 imposes the enable signal 7 to be advanced in respect of emission of the modulation pulse 5. The configuration of the oscillator 102 shown in Fig. 4 is particularly adapted to minimise the triggering time.

Fig. 1 shows the typical power course of the transmitted signal, with times that can be compared to the interval between two power pulses 3, whereas Fig. 2b details the envelope of a single power pulse 3.

Advantageously, each power pulse 3 has a leading edge 3a and a trailing edge 3b defining an asymmetric-bell envelope (Figs. 2b and 5c). Preferably, the trailing edge 3b of the power pulse 3 is steeper than the leading edge 3a.

With reference to Fig. 1, the transmitted power pulse 3 is characterised by a predetermined pulse width $T_{ON}$ and an average time interval between the pulses $T_{INT}$.

With reference to Fig. 2b, it is to be noted that the envelope of the transmitted power pulse 3 is not rectangular.

It is therefore necessary to calculate the predetermined width $T_{ON}$ as base of the rectangle having the same area as that subtended by the integral of the envelope of the whole power pulse 3, with the height equal to the peak power $P_{PK}$, corresponding to the crest value. The predetermined width $T_{ON}$, corresponding to the base of the rectangle having the same height as above specified is preferably included between 0.1 and 300 $\mu$s.

It is advisable for the ratio $T_{ON}/T_{INT}$ to be as low as possible, in order to minimise the average power. In fact the average power $P_{MED}$ absorbed by the transmitter depends on the peak power $P_{PK}$ absorbed by the transmitting circuit and on the ratio $T_{ON}/T_{INT}$, in accordance with the following formula:

$$P_{MED} = P_{PK} * T_{ON}/T_{INT}.$$

The ratio $T_{ON}/T_{INT}$ between the predetermined width $T_{ON}$ and the average value of the time spacing intervals TINT is smaller than 0.2 and preferably included between $10^{-1}$ and $10^{-5}$.

The peak power $P_{PK}$ absorbed by the transmitting circuit, in turn, depends on the irradiated power $P_{POUT}$ and the yield $\eta$ of the circuit, inclusive of an antenna 14:

$$P_{PK} = P_{POUT} / \eta.$$

From the above formula it is apparent that the greater the yield $\eta$ of the electric circuit, the smaller the power absorbed for power supply $P_{PK}$, the irradiated power $P_{POUT}$ being the same.

In order to calculate the data transfer speed the following steps can be carried out:

1) The minimum admissible duration $T_{ON}$ of the power pulse 3 is defined, depending on the band width that can be occupied and the processing capacity of the transmitting and receiving circuits.

2) The peak power $P_{POUT}$ that the transmitter must irradiate is defined, based on the connecting distance to be reached and the receiver sensitivity. From that, through use of the above mentioned formulas, the absorbed peak power $P_{PK}$ is obtained.

3) The average power $P_{MED}$ that the circuit should absorb from power supply is defined, based on the requirements of same; therefrom $T_{INT}$ is obtained through the following formula:

$$T_{INT} = T_{ON} * P_{PK}/P_{MED}.$$

4) The theoretical data transfer speed (bits per second, $B_R$) depends on $T_{INT}$ and on how many bits $N_{BP}$ are transmitted by each pulse, in accordance with the following formula:

$$B_R = N_{BP} / T_{INT}.$$

From the above calculations it is possible to deduce that there is a proportionality relation between the average power absorbed by the circuit and the data transfer speed:

$$P_{MED} = B_R \cdot (T_{ON}*P_{POUT}) / (\eta*N_{BP})$$

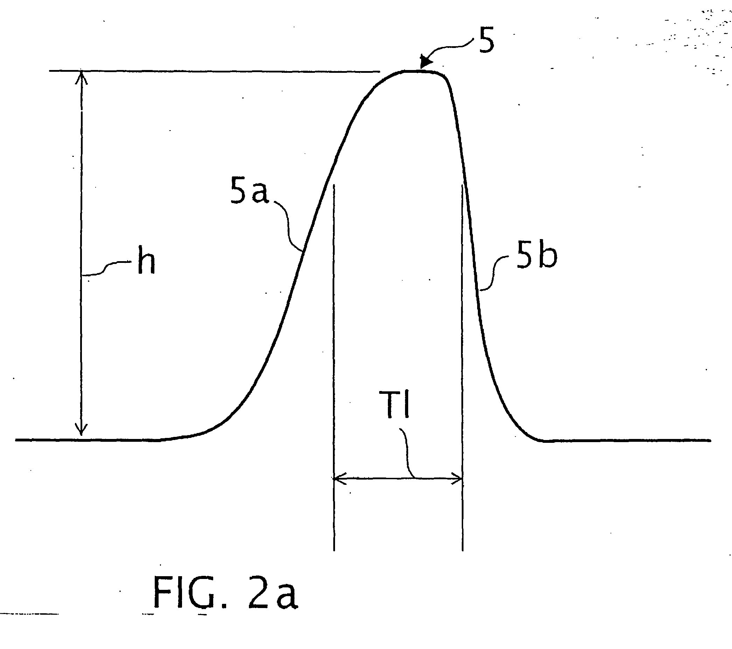

To obtain the characteristics of the power pulse 3 as above specified, the envelope of a modulation pulse 5 must have a particular shape represented in Fig. 2a, so that the slope of the signal edges must be controlled with accuracy.

To this aim, the step of generating a plurality of modulation pulses 5 comprises, for each modulation pulse 5, the sub-step of generating a leading edge 5a and a trailing edge 5b defining a bell-shaped envelope. Advantageously, this bell-shaped envelope is asymmetric and, preferably, the trailing edge 5b is steeper than the leading edge 5a.

In addition, each modulation pulse 5 has a predetermined width TI included between 0.1 and 300 $\mu$s and a predetermined height h, typically corresponding to the feeding value, wherein the predetermined width TI is the base of the rectangle having the same area as that subtended by the integral of the envelope of the whole modulation pulse 5.

Finally, the ratio between the predetermined width TI and the average value of the time spacing intervals $T_{INT}$ is smaller than 0.2 and preferably included between $10^{-1}$ and $10^{-5}$.

The receiving device 2, when a low-consumption feature is not required, only needs to be sufficiently quick to succeed in discriminating the received pulses.

When, on the contrary, a reduced consumption is required, in addition to the above-mentioned discriminating capability, it is necessary that the circuits be generally disconnected and/or disabled, being activated only in the short periods of time during which the pulse 3 to be received could fall.

This type of operation is only possible if the transmitted data have been coded with a correlation algorithm capable of enabling the time position relative to each transmitted pulse 3 to be foreseen.

This can be for example obtained if each transmitted pulse 3, in addition to the value to be sent, also contains the time position information referring to the following pulse. This correlation algorithm should enable the receiver 2 to be only activated short before arrival of the subsequent pulse and to be deactivated immediately after said arrival. In particular, according to the above mentioned example, the information on the position should be predominant with respect to the value to be sent, so as to restrict the record of cases of possible positions that could be taken by the subsequent pulse and thus be able to reduce the activation time of the circuits of receiver 2.

The activity window of receiver 2 must be in any case large enough to enable it to intercept the pulse in any of the possible positions said pulse can take.

Different types of receivers can be used, depending on the applications and the required sensibility. It is however necessary to consider that, in order to obtain the characteristic of low consumption, the different parts of the receiving circuit are required to be fully or partly disabled during the pauses between a pulse and the other, without impairing a correct operation of same.

In other words, it is necessary that the receiving circuits be enabled upon command and that the activation time required by said circuits for reaching full operation be very low, preferably in the order of some microseconds.

In the same manner as the case of transmitter 1, these features can be hardly obtained with receivers of the superheterodyne type with a local PLL oscillator; on the contrary, in this case too a SAW resonator can be used.

Other possible configurations, even if less performing, are: direct-amplification receivers to be used in those applications where a low sensitivity is sufficient (short-range connections); receivers of the superregeneration type, to be only used when a low speed in the data flow is acceptable, due to the greater slowness in activation. In this case it is necessary to proportionally extend both the pulse duration and the interval between said pulses.

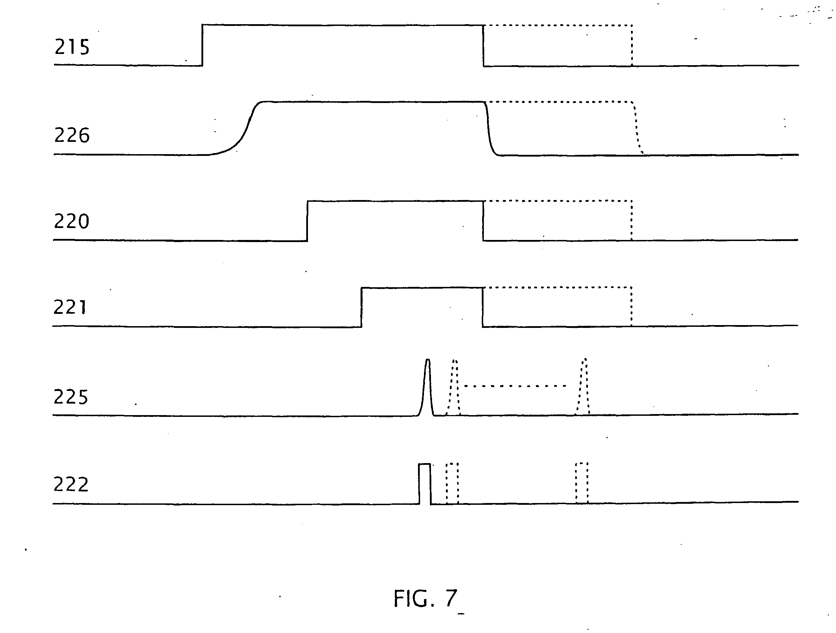

Figs. 6 and 7 refer to a receiving device 2 with a preferred configuration, i.e. a simple-conversion superheterodyne receiver, with a local SAW-resonator oscillator.

Fig. 6 represents the block diagram of receiver 2. Management of the receiving device 2 takes place by means of a control and timing unit 210, preferably based on a microcontroller.

The receiving and detecting circuit further comprises: an input filter 211 confining the passband of the signal received in antenna 224; an input amplifier 213 amplifying the received signal; a conversion mixer 214 that, by mixing the signal present at the output of the input amplifier with the signal from the local oscillator 212, produces a beat signal at the intermediate frequency (I.F.), to be applied to the I.F. filter 216; an I.F. amplifier 217; an I.F. signal-detecting circuit 218, at the output of which there will be the demodulated signal 225; a demodulated pulse-detecting circuit 219 capable of converting the analog voltage of the demodulated signal to a logic state.

The control and timing unit 210, by means of the above mentioned correlation algorithm generates the digital enable signals of oscillator 215, the activation signals 220 of the other radio-frequency stages 213, 214 and 217 and the enable signals 221 of the pulse detecting circuit 219.

The typical timing diagram of the above mentioned signals is shown in Fig. 7. Graph 226 represents the envelope of the output signal of the local oscillator.

The present invention achieves the intended purposes and has important advantages.

First of all, the communication method of the invention allows the energy consumption of the radio-frequency circuits in the radio transmitting and/or receiving devices to be reduced ten to more than 1000 times as compared with the circuits used in traditional techniques.

Application examples in which use of low-energy power sources is particularly appropriate are: transmission of data detected by environmental sensors or others; control apparatus to be used for automation in the household environment field; data transmission and reception by devices disposed on moving members and/or mobile sets; active transponders. The use of low-consumption devices enables achievement of many advantages, among which: use of batteries of reduced sizes and capacity; reduction in the interventions for servicing, due to the increase of the autonomy period of the batteries; possibility of power supply from alternative energy sources, such as luminous, thermal or mechanical energy, through use of suitable transducers; possibility of reducing sizes and weight of the device; possibility of power supply through electrolytic, electrochemical or other condensers, when a recharge system is usable.

In addition, the communication method of the invention is able to greatly reduce the influence of the Doppler effect and the spread reflections on reception, while maintaining the previously mentioned features of low consumption. These features make the method of the invention particularly suitable for data exchange between moving devices and under conditions of strong reflections generated by moving objects. Examples of communications affected by the Doppler effect and the spread reflection phenomenon are: communication from sensors and/or control devices or towards actuators disposed on mechanical moving members, such as vehicle wheels, propellers and turbines, spindles of machine-tools, etc.; communication between radio devices in which moving parts can be interposed or can interfere, such as fan blades, motor-vehicles passing by, etc.

In addition, it is able to limit the band occupancy at the desired width, therefore allowing use of frequency ranges even different from those usable for UWB transmissions, while enabling all the available band to be used, consistently with the regulations in force for the different frequency ranges that can be used.

Finally, this method enables the time occupancy of the radio channel to be reduced and, in addition to obtaining the advantage of a reduction in consumption, it has further qualities: possibility of causing several communications using the transmission system in reference, to co-exist on the same radio channel, which is obtainable through use of anti-collision algorithms; low interference towards transmission systems of the traditional type operating on the same radio channel; high intelligibility of the received signal, even in the presence of occupancy of the radio channel by a transmission of the traditional type, due to the high asymmetry of the waveform characterising the system in reference.

## Claims

1.  A method of communicating information, comprising the following steps:

    - generating a plurality of power pulses (3) the time spacing of which is modulated by the information to be transmitted, said step of generating the power pulses (3) comprises the following sub-steps:

        - generating a plurality of carrier signals (4) that are mutually spaced by respective time spacing intervals ($T_{int}$), said step of generating a plurality of carrier signals (4) comprising the sub-step of sequentially sending a plurality of enable signals (7) to an oscillator to trigger generation of said plurality of carrier signals (4);
        - generating a plurality of modulation pulses (5) mutually spaced by respective time spacing intervals ($T_{int}$);
        - modulating the carrier signals (4) through the modulation pulses (5) to generate the power pulses (3) to be transmitted, and

    - transmitting said power pulses (3) to a receiver via radio waves;

    **characterized in that** the step of modulating the carrier signals (4) comprises:

        - a sub-step of sending the plurality of modulation pulses (5) to the oscillator (102), to modulate said oscillator (102) and obtain a plurality of partly modulated pulses (9) outputted from the oscillator (102);
        - a sub-step of sending the plurality of partly modulated pulses (9) to an amplifier (104); and
        - a sub-step of sending the plurality of modulation pulses (5) to the amplifier (104), to modulate the amplifier (104) and output the power pulses (3) to be transmitted from said amplifier (104).

2.  A method as claimed in claim 1, wherein the step of modulating the amplifier (104) is carried out by directly modulating feeding and/or polarisation of the active component of the amplifier.

3.  A method as claimed in claim 1, wherein the step of generating a plurality of modulation pulses (5) comprises, for each modulation pulse (5), the sub-step of generating a leading edge (5a) and a trailing edge (5b) defining an asymmetric bell-shaped envelope.

4.  A method as claimed in claim 3, wherein the trailing edge (5b) is steeper than the leading edge (5a).

5.  A method as claimed in claim 3 or 4, wherein each modulation pulse (5) has a predetermined width (1) included between 0.1 and 300 $\mu$s.

6.  A method as claimed in claim 3 or 4, wherein each modulation pulse (5) has a predetermined width (T1) and wherein the ratio between the predetermined width (T1) and the average value of the time spacing intervals ($T_{int}$) is smaller than 0.2 and preferably included between $10^{-1}$ and $10^{-5}$.

7.  A method as claimed in claim 1, wherein each power pulse (3) has a leading edge (3a) and a trailing edge (3b) defining an asymmetric bell-shaped envelope.

8. A method as claimed in claim 7, wherein the trailing edge (3b) of the power pulse (3) is steeper than the leading edge (3a).

9. A method as claimed in claim 1, wherein each power pulse (3) has a predetermined width (1) included between 0.1 and 300 $\mu$s.

10. A method as claimed in claim 1, wherein each power pulse (3) has a predetermined width ($T_{on}$) and wherein the ratio between the predetermined width ($T_{on}$) and the average value of the time spacing intervals ($T_{int}$) is smaller than 0.2 and preferably included between $10^{-1}$ and $10^{-5}$.

11. A method as claimed in claim 1, further comprising the step of coding the information with a correlation algorithm that, during the reception step, enables the position taken by each transmitted power pulse (3) to be foreseen.

**Patentansprüche**

1. Verfahren zur Mitteilung von Informationen, umfassend die folgenden Schritte:

- Erzeugen einer Vielzahl von Leistungsimpulsen (3), deren Zeitabstand durch die zu übertragenden Informationen moduliert wird, wobei der Schritt des Erzeugens der Leistungsimpulse (3) die folgenden Unterschritte umfasst:

· Erzeugen einer Vielzahl von Trägersignalen (4), die durch entsprechende Zeitabstandsintervalle ($T_{int}$) gegenseitig beabstandet sind, wobei der Schritt des Erzeugens einer Vielzahl von Trägersignalen (4) den Unterschritt umfasst, in Reihenfolge eine Vielzahl von Befähigungssignalen (7) einem Oszillator zum Auslösen des Erzeugens der Vielzahl von Trägersignalen (4) zu senden;
· Erzeugen einer Vielzahl von Modulierimpulsen (5), die durch entsprechende Zeitabstandsintervalle ($T_{int}$) gegenseitig beabstandet sind;
· Modulieren der Trägersignale (4) über die Modulierimpulse (5) zum Erzeugen von zu sendenden Leistungsimpulsen (3); und

- Senden der Leistungsimpulse (3) einem Empfänger (2) über Funkwellen;

**dadurch gekennzeichnet, dass** der Schritt zum Modulieren der Trägersignale (4) umfasst:

- einen Unterschritt zum Senden der Vielzahl von Modulierimpulsen (5) im Oszillator (102), um den Oszillator (102) zu modulieren und am Ausgang des Oszillators (102) eine Vielzahl von teilweise modulierten Impulsen (9) zu erhalten;
- einen Unterschritt zum Senden der Vielzahl von teilweise modulierten Impulsen (9) einem Verstärker (104); und
- einen Unterschritt zum Senden der Vielzahl von Modulierimpulsen (5) im Verstärker (104), um den Verstärker (104) zu modulieren und am Ausgang des Verstärkers (104) die zu sendenden Leistungsimpulse zu erhalten.

2. Verfahren nach Anspruch 1, bei dem der Schritt zum Modulieren des Verstärkers (104) durchgeführt wird, indem unmittelbar die Speisung und/oder die Polarisierung des aktiven Bestandteils des Verstärkers unmittelbar moduliert wird.

3. Verfahren nach Anspruch 1, bei dem der Schritt zum Erzeugen einer Vielzahl von Modulierimpulsen (5), für jeden Modulierimpuls (5), den Unterschritt zum Erzeugen einer ansteigenden Front (5a) und einer absteigenden Front (5b) umfasst, die eine Hüllkurve asymmetrischer Glockenform festlegen.

4. Verfahren nach Anspruch 3, bei dem die absteigende Front (5b) steiler ist als die ansteigende Front (5a).

5. Verfahren nach Anspruch 3 oder 4, bei dem jeder Modulierimpuls (5) eine vorgegebene Breite (1) zwischen 0,1 und 300 $\mu$s aufweist.

6. Verfahren nach Anspruch 3 oder 4, bei dem jeder Modulierimpuls (5) eine vorgegebene Breite (T1) aufweist und bei dem das Verhältnis zwischen der vorgegebenen Breite (T1) und dem Mittelwert der Zeitabstandsintervalle ($T_{int}$) kleiner als 0,2 und bevorzugter Weise zwischen $10^{-1}$ und $10^{-5}$ ist.

**7.** Verfahren nach Anspruch 1, bei dem jeder Leistungsimpuls (3) eine ansteigende Front (3a) und eine absteigende Front (3b) umfasst, die eine Hüllkurve asymmetrischer Glockenform festlegen.

**8.** Verfahren nach Anspruch 7, bei dem die absteigende Front (3b) des Leistungsimpulses (3) steiler ist als die ansteigende Front (3a).

**9.** Verfahren nach Anspruch 1, bei dem jeder Leistungsimpuls (3) eine vorgegebene Breite (1) zwischen 0,1 und 300 $\mu$s umfasst.

**10.** Verfahren nach Anspruch 1, bei dem jeder Leistungsimpuls (3) eine vorgegebene Breite ($T_{on}$) aufweist und bei dem das Verhältnis zwischen der vorgegebenen Breite ($T_{on}$) und dem Mittelwert der Zeitabstandsintervalle ($T_{int}$) kleiner als 0,2 und bevorzugter Weise zwischen $10^{-1}$ und $10^{-5}$ ist.

**11.** Verfahren nach Anspruch 1, umfassend überdies den Schritt, die Informationen mit einem Korrelationsalgorithmus zu verschlüsseln, der es erlaubt in Empfangsfase die von jedem gesandten Leistungsimpuls (3) eingenommene Stellung vorauszusehen.

**Revendications**

**1.** Procédé pour la communication d'informations comprenant les étapes suivantes:

- générer une pluralité d'impulsions de puissance (3) dont l'espacement dans le temps est modulé par les informations à transmettre, ladite étape de générer les impulsions de puissance (3) comporte les sous-étapes suivantes:

· générer une pluralité de signaux porteurs (4) qui sont espacés réciproquement par des intervalles d'espacement dans le temps ($T_{int}$), ladite étape de générer une pluralité de signaux porteurs (4) comprenant la sous-étape d'envoyer en séquence une pluralité de signaux de validation (7) à un oscillateur pour déclencher la génération de ladite pluralité de signaux porteurs (4),
· générer une pluralité d'impulsions de modulation (5) espacées réciproquement par des intervalles d'espacement dans le temps respectifs ($T_{int}$),
· moduler les signaux porteurs (4) par l'intermédiaire des impulsions de modulation (5) pour générer les impulsions de puissance (3) à transmettre; et

- transmettre lesdites impulsions de puissance (3) à un récepteur à travers des ondes radio;

**caractérisé en ce que** l'étape de moduler les signaux porteurs (4) comporte:

- une sous-étape d'envoyer la pluralité d'impulsions de modulation (5) à l'oscillateur (102), pour moduler ledit oscillateur (102) et obtenir une pluralité d'impulsions (9) partiellement modulées sorties de l'oscillateur (102);
- une sous-étape d'envoyer la pluralité d'impulsions (9) partiellement modulées à un amplificateur (104); et
- une sous-étape d'envoyer la pluralité d'impulsions de modulation (5) dans l'amplificateur (104), pour moduler l'amplificateur (104) et sortir les impulsions de puissance (3) à transmettre par ledit amplificateur (104).

**2.** Procédé selon la revendication 1, dans lequel l'étape de moduler l'amplificateur (104) est effectuée en modulant directement l'alimentation et/ou la polarisation du composant actif de l'amplificateur.

**3.** Procédé selon la revendication 1, dans lequel l'étape de générer une pluralité d'impulsions de modulation (5) comporte, pour chaque impulsion de modulation, la sous-étape de générer un bord avant ou front d'onde (5a) et un bord arrière ou queue d'onde (5b) définissant une enveloppe en forme de cloche asymétrique.

**4.** Procédé selon la revendication 3, dans lequel la queue d'onde (5b) est plus raide que le front d'onde (5a).

**5.** Procédé selon la revendication 3 ou 4, dans lequel chaque impulsion de modulation (5) a une largeur prédéterminée (1) comprise entre 0,1 et 300 $\mu$s.

**6.** Procédé selon la revendication 3 ou 4, dans lequel chaque impulsion de modulation (5) a une largeur prédéterminée (T1) et dans lequel le rapport entre la largeur prédéterminée (T1) et la valeur moyenne des intervalles d'espacement dans le temps ($T_{int}$) est plus petit que 0,2 et de préférence compris entre $10^{-1}$ et $10^{-5}$.

7. Procédé selon la revendication 1, dans lequel chaque impulsion de puissance (3) a un front d'onde (3a) et une queue d'onde (3b) définissant une enveloppe en forme de cloche asymétrique.

8. Procédé selon la revendication 7, dans lequel la queue d'onde (3b) de l'impulsion de puissance (3) est plus raide que le front d'onde (3a).

9. Procédé selon la revendication 1, dans lequel chaque impulsion de puissance (3) a une largeur prédéterminée (1) comprise entre 0,1 et 300 $\mu$s.

10. Procédé selon la revendication 1, dans lequel chaque impulsion de puissance (3) a une largeur prédéterminée ($T_{on}$) et dans lequel le rapport entre la largeur prédéterminée ($T_{on}$) et la valeur moyenne des intervalles d'espacement dans le temps ($T_{int}$) est plus petit que 0,2 et de préférence compris entre $10^{-1}$ et $10^{-5}$.

11. Procédé selon la revendication 1, comprenant en outre l'étape d'encoder les informations avec un algorithme de corrélation qui, pendant l'étape de réception, permet de prévoir la position prise par chaque impulsion de puissance (3) transmise.

FIG. 1

5

5b

5a

TI

h

FIG. 2a

FIG. 2b

EP 1 655 853 B1

FIG. 3

FIG. 4

FIG. 5

FIG. 6

FIG. 7

EP 1 655 853 B1